# EUROPEAN PATENT APPLICATION

(11) **EP 1 398 234 A1**
(43) Date of publication of application: **17.03.2004**
(21) Application number: 03019973.1
(22) Date of filing: 03.09.2003
(51) Int. Cl.: B60T 7/22, G01S 13/93

(54) **Safety device for interrupting the reversing movement of a vehicle in proximity to obstacles**

(30) Priority: 13.09.2002 IT MI20021952
(71) Applicant: Torri, Ivan, 24122 Bergamo (IT)
(72) Inventor: Torri, Ivan, 24122 Bergamo (IT)
(74) Representative: Ripamonti, Enrico, Dr. Ing.

(57) **Abstract**

A safety device for interrupting the reversing movement of a vehicle, in particular of commercial or industrial type, said vehicle comprising a braking system (1 ) of compressed air or hydropneumatic type presenting at least one vessel (7) containing a pressurized fluid, said system (1) comprising usual braking members (2) associated with the wheels (3) of the vehicle, this latter comprising an engine gear change lever (9) and usual warning lights (18) activated on selecting the device, parking sensors (17) being provided connected to at least one acoustic alarm (19) which is activated when said sensors (17) sense an obstacle during vehicle reversing. Means (10, 15) are provided to activate the braking members (2) when the distance between the vehicle and said obstacle is equal to a predetermined value.

## Description

The present invention relates to a safety device in accordance with the introduction to the main claim.

With particular but non-limiting reference to commercial and industrial vehicles, these are known to comprise acoustic reversing alarms, which are activated when the driver engages the reverse gear. These alarms provide persons close to the vehicle with an awareness of this reversing, so enabling them to position themselves at safe points in order not to impede the vehicle or be struck by it.

Said alarms can also be associated with known proximity sensors fixed in suitable positions on the rear of the vehicle., These sensors or "parking sensors" are hermetically sealed ultrasonic sensors isolated from the environment surrounding the vehicle. When the device is engaged, these sensors sense the presence of obstacles lying to the rear of the vehicle and display the variation in the distance of the vehicle from the obstacle by generating within the driver's cab an acoustic signal, the frequency and tone of which vary as a function of this distance.

Notwithstanding the presence of known devices for indicating reversing or the distance from an obstacle to the rear of the vehicle, it is always possible for it to touch said obstacle, with obvious consequences for the contacting vehicle and/or obstacle.

An object of the invention is to provide a safety device activated during vehicle reversing, which represents an improvement on similar known devices.

Another object is to provide a device of the said type which is of simple construction and reliable use, which enables the reversing manoeuvre to be made safer for the vehicle and for the surrounding obstacles or persons, and which is more controlled and less stressful for the driver.

These and further objects which will be apparent to the expert of the art are attained by a safety device in accordance with the accompanying claims.

The invention will be more apparent from the accompanying drawing, which is provided by way of non-limiting example and in which:

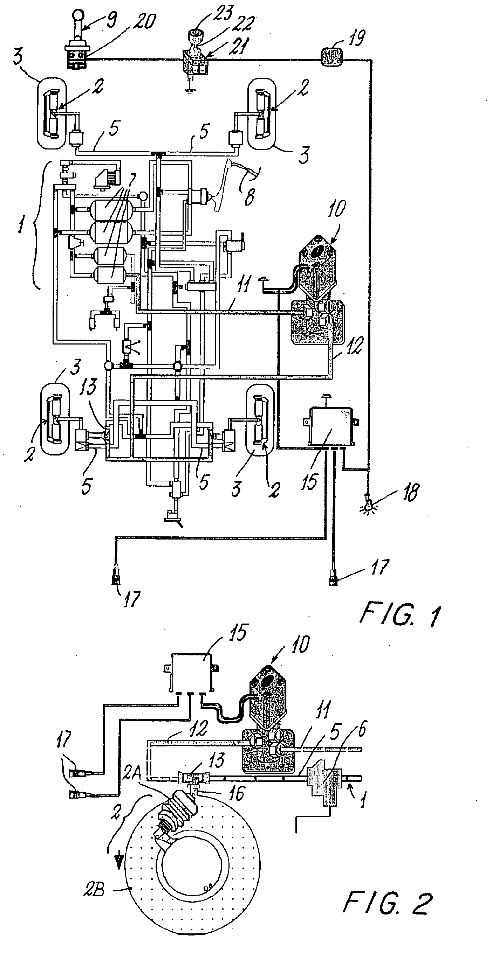

Figure 1 shows schematically a braking circuit of known type for a vehicle with which a device of the invention is associated; and
Figure 2 shows schematically a part of the device of Figure 1.

With reference to said figures, a vehicle, with which the device of the invention is associated, comprises a braking system 1 (of compressed air or hydropneumatic type); this braking system or circuit is of known type and will not be further described other than the fact that it comprises, inter alia, braking elements 2 (for example calipers 2A and brake discs 2B) associated with vehicle wheels 3 to which conduits 5 connected to at least one pressure control valve 6 extend. The system comprises one or more vessels 7 for the pressurized fluid (for example air) and a brake pedal 8.

The vehicle comprises a usual engine gear selection member or lever 9 to which the device of the invention is connected.

This device comprises an intervention unit 10 connected via a first conduit 11 to at least one vessel 7, and via a second conduit 12 to at least two three-way valve members 13 defined by differential servo-deviators positioned in proximity to corresponding braking elements 2 (present on the same vehicle axle) and to which the conduits 5 also lead. A conduit 16 extends from each of the members or servo-deviators 13 to a brake caliper 2A.

Specifically, the intervention unit 10 is an electropneumatic valve and is connected to and controlled by a control unit 15 to which there are connected parking sensors 17 located in suitable positions on the vehicle rear, the usual vehicle reversing light 18 and an acoustic alarm 19 positioned in the vehicle driver's cab. A position sensor 20 is connected to the control unit 15, for example via the acoustic alarm 19, and is associated with the gear selection lever 9 to sense when the device is engaged. An exclusion member 21 for the device of the invention, defined for example by a switch 22 provided with a warning light 23 is provided, to be easily reachable, in the driver's cab between the sensor 20 and the control unit 15.

It will now be assumed that the vehicle provided with the device of the invention is to be used. On engaging the device, the position sensor 20 senses that said gear has been engaged and indicates this to the control unit 15; the acoustic alarm 19 is simultaneously activated. By means of the sensors 17 positioned on the vehicle rear, the control unit 15 monitors the entire cross-section of the vehicle to sense any presence of obstacles in the travel direction. The presence of an obstacle, sensed by the sensors 17 and noted by the unit 15, is indicated to the driver, starting for example from a distance of 1.5 m, by an intermittent acoustic signal generated by the alarm 19.

If for any reason the driver does not act to stop the vehicle at a predetermined distance, for example 30 cm, from the obstacle, the safety characteristic of the invention comes into operation. In effect, only at this point does the control unit 15 automatically activate the electropneumatic intervention unit 10, which by enabling compressed air from the vessel 7 to pass to the brake calipers 2A on the axle, immediately stops and locks the vehicle.

It should be noted that the device of the invention can intervene only when the device is engaged, however the driver always has absolute control over the braking system as he can always brake the vehicle by operating the pedal 8.

The device can be disengaged by the exclusion member 21, for example during reversing to loading platforms, or during all approach manoeuvres to loading-unloading doors of the cold chain. In these cases the driver, having engaged the device, continues manoeuvring until the limit, i.e. until the vehicle automatically stops (for example at 30 cm from the obstacle): He can then safely exclude the device by operating the switch 22 and continue reversing the vehicle under his own control, until contact occurs with the loading and unloading platform or wharf. Exclusion of the device is indicated to the driver by the warning light 43 which is extinguished as soon as the driver again puts the system into stand-by by simply disengaging the device.

By virtue of the device of the invention, the driver obtains a valid aid providing considerable safety in reversing, because it renders the manoeuvres less stressful, reduces manoeuvring times, and eliminates damage to his vehicle and to third parties, in addition to providing a large contribution to collective safety by totally eliminating death caused by such manoeuvres.

## Claims

1. A safety device for interrupting the reversing movement of a vehicle, in particular of commercial or industrial type, said vehicle comprising a braking system (1) of compressed air or hydropneumatic type presenting at least one vessel (7) containing a pressurized fluid, said system (1) comprising usual braking members (2) associated with the wheels (3) of the vehicle, this latter comprising an engine gear change lever (9) and usual warning lights (18) activated on selecting the device, parking sensors (17) being provided connected to at least one acoustic alarm (19) which is activated when said sensors (17) sense an obstacle during vehicle reversing, said device being **characterised by** comprising means (10, 15) for activating the braking members (2) when the distance between the vehicle and said obstacle is equal to a predetermined value.

2. A device as claimed in claim 1, **characterised in that** the means for activating the braking members comprise an intervention unit (10) connected to the vessel (7) of the braking system and at least to those braking members (2) associated with one and the same vehicle axle, said intervention unit (10) being controlled by a control unit (15) connected to the parking sensors (17) and acting on the intervention unit (10) on the basis of the distance sensed by said parking sensors (17).

3. A device as claimed in claim 2, **characterised in that** the intervention unit (10) is an electropneumatic valve.

4. A device as claimed in claim 2, **characterised in that** the intervention unit (10) is connected to each braking member via a conduit (12) terminating in a three-way valve member (13) to which a conduit (5) of the vehicle braking system also extends.

5. A device as claimed in claim 4, **characterised in that** the three-way valve member (13) is a differential servo-deviator.

6. A device as claimed in claim 2, **characterised in that** the control unit (15) is connected to at least one usual vehicle reversing warning light (18) and to the acoustic alarm (19).

7. A device as claimed in claim 1, **characterised by** comprising, positioned in the vehicle driver's cab, a member (21) for excluding its intervention on the braking members (2).

8. A device as claimed in claim 7, **characterised in that** the exclusion member is a switch (22) positioned between the gear change lever (9) and the control unit (15).

9. A device as claimed in claim 8, **characterised in that** the switch (22) is provided with a warning light (23).
